# EUROPÄISCHE PATENTSCHRIFT

(11) **EP 2 239 125 B1**
(45) Veröffentlichungstag und Bekanntmachung des Hinweises auf die Patenterteilung: **25.09.2013**
(21) Anmeldenummer: 10002917.2
(22) Anmeldetag: 19.03.2010
(51) Int. Cl.: B29C 45/17, B29C 45/77, B29C 45/50

(54) **Spritzeinheit einer Spritzgießmaschine**
Injection unit of an injection moulding machine
Unité d'injection d'une machine de moulage par injection

(30) Priorität: 07.04.2009 DE 102009016783
(43) Veröffentlichungstag der Anmeldung: 13.10.2010
(73) Patentinhaber: Wittmann Battenfeld GmbH, 2542 Kottingbrunn (AT)
(72) Erfinder: Brunbauer, Klaus, 2540 Bad Voeslau (AT); Wilfing, Franz, 4210 Mattersburg (AT); Lechner, Andreas, 2362 Pottenstein (AT); Zoehling Bernhard, 2751 Hoelles (AT)
(74) Vertreter: Gosdin, Michael

(56) Entgegenhaltungen:
- EP-A2- 0 230 488
- DE-A1- 10 114 006
- DE-U1-202004 004 549
- JP-A- 9 174 627

## Beschreibung

Die Erfindung betrifft eine Spritzeinheit einer Spritzgießmaschine, die relativ zu einem Maschinenbett der Spritzgießmaschine in eine Achsrichtung verschiebbar angeordnet ist, wobei die Spritzeinheit einen Grundkörper aufweist, an dem ein Schneckenzylinder angeordnet ist, wobei in dem Schneckenzylinder eine Schnecke drehbar und axial verschieblich angeordnet ist, wobei die Schnecke an einem axialen Ende mit einem Antriebselement verbunden ist, das die Schnecke sowohl drehen als auch in Achsrichtung verschieben kann, wobei das Antriebselement ein in Achsrichtung verschiebliches Getriebeelement umfasst sowie ein Bewegungselement, das am Getriebeelement und am Grundkörper angreift und eine translatorische Verschiebebewegung in Achsrichtung ausführen kann, wobei der Grundkörper als einteiliger Block ausgebildet ist, der an seinem einen axialen Ende eine plattenförmige Aufnahme für den Schneckenzylinder und an seinem entgegengesetzten axialen Ende eine plattenförmige Aufnahme für das Bewegungselement aufweist, wobei die beiden plattenförmigen Aufnahmen über mindestens zwei Verbindungsabschnitte miteinander verbunden sind.

Eine derartige Spritzeinheit einer Spritzgießmaschine ist aus der EP 0 230 488 A2 bekannt. In einem axialen, verdickten Endbereich des Grundkörpers ist hier ein Dehnungsmessstreifen angeordnet, mit dem Verformungen gemessen werden können. Eine weitere Spritzeinheit einer Spritzgießmaschine dieser Art ist aus der DE 600 17 393 T2 bekannt. Ähnliche Lösungen zeigen die DE 10 2004 023 837 B3, die DE 10 2004 056 209 A1, die DE 103 37 785 B3, die DE 36 37 897 A1, die EP 0 998 380 B1 und die DE 20 2004 004 549 U1. Dort wird eine kompakte Bauweise für den Antrieb einer Plastifizier- und Einspritzschnecke erreicht, indem ein Getriebeelement so ausgeführt ist, dass es die Schnecke sowohl drehantreiben als auch in Achsrichtung verschieben kann. Für die axiale Verschiebung wird ein Spindel-Mutter-System eingesetzt. Der Grundkörper, in dem das Getriebeelement angeordnet und an dem weiterhin auch der Schneckenzylinder angebracht ist, wird durch zwei Platten gebildet, die über Holme miteinander auf Abstand gehalten werden.

Eine solche Bauart für den Grundkörper hat sich durchgesetzt, weist allerdings auch Nachteile auf: Der Grundkörper wird aus einer Anzahl von einzelnen Bauteilen zusammengesetzt, was einen relativ hohen fertigungstechnischen Aufwand bedeutet. Durch die zusammengefügten Bauteile addieren sich auch Fertigungstoleranzen, so dass die Präzision der Führung der sich translatorisch in Richtung der Längsachse bewegenden Teile begrenzt ist.

Die vorbekannten Lösungen können nur bis zu einem gewissen Grade die Halterung der Spindel in der korrekten Stellung sicherstellen, was zu einer Anfälligkeit der Spindeln und dadurch zu einer verringerten Haltbarkeit durch auftretenden Winkelversatz führt, der sich durch Schiefstellungen und Biegung ergibt. Es hat sich insbesondere herausgestellt, dass der mehrteilige Aufbau des Grundkörpers durch sich aufsummierende Toleranzen und Fertigungsabweichungen zu Ungenauigkeiten führt, die die Genauigkeit der Position der zu haltenden Elemente negativ beeinträchtigt.

Da für die genaue und optimale Steuerung bzw. Regelung des Spritzgießprozesses diverse Spritzgießparameter bekannt sein müssen und insbesondere die in Richtung der Längsachse auf die Schnecke wirkende Kraft gemessen werden muss, sind Lösungen bekannt geworden, die hierfür in nachteiliger Weise einen relativ hohen vorrichtungstechnischen Aufwand treiben müssen, um die Axialkraft hinreichend genau zu bestimmen.

Der Erfindung liegt die Aufgabe zugrunde, eine Spritzeinheit einer Spritzgießmaschine der eingangs genannten Art so fortzubilden, dass es möglich wird, eine stabilere und kompaktere Bauweise des Grundkörpers zu erreichen bzw. beizubehalten. Der Grundkörper soll sich durch eine hohe Präzision für die Führungen der sich translatorisch bewegenden Elemente auszeichnen. Ferner soll es ermöglicht werden, dass insbesondere die in Richtung der Längsachse wirkende Kraft auf die Schnecke einfach und genau gemessen werden kann. Schließlich soll die Konstruktion einfach aufgebaut sein, so dass eine preiswerte Herstellung möglich ist.

Die Lösung dieser Aufgabe durch die Erfindung ist dadurch gekennzeichnet, dass an mindestens einem der Verbindungsabschnitte ein Messelement zur Messung des Spannungszustandes in Achsrichtung angeordnet ist, wobei im Bereich des Messelements die Wanddicke des Verbindungsabschnitts zumindest teilweise reduziert ist und wobei das Messelement einen Dehnungsmessstreifen umfasst.

Der Grundkörper ist dabei bevorzugt als Gussteil, insbesondere als Kugelgraphitgussteil oder Stahlgussteil, ausgeführt.

Mindestens einer der Verbindungsabschnitte kann als Platte ausgebildet sein, die sich über die Breite des Grundkörpers horizontal und quer zur Achsrichtung erstreckt. Um Gewicht zu sparen, kann aber auch vorgesehen sein, dass mindestens einer der Verbindungsabschnitte als Stab ausgebildet ist, der sich in einem Eckenbereich des Grundkörpers in Achsrichtung erstreckt; bevorzugt sind dabei vier als Stäbe ausgebildete Verbindungsabschnitte in den vier Eckenbereich des Grundkörpers angeordnet.

Das Getriebeelement kann zwei Elektromotoren, insbesondere zwei Servomotoren, umfassen, die für die Drehung der Schnecke und die axiale Verschiebung des Getriebeelements in Achsrichtung ausgebildet sind. Das Getriebeelement ist bevorzugt relativ zu dem Grundkörper in Achsrichtung mittels einer Linearführung beweglich angeordnet.

Das Bewegungselement kann als Spindel-Mutter-System ausgeführt sein. Die Mutter des Spindel-Mutter-System kann an der einen plattenförmigen Aufnahme befestigt sein. Die Spindel des Spindel-Mutter-System kann durch das Getriebeelement gedreht werden.

Der Schneckenzylinder kann an der einen plattenförmigen Aufnahme des Grundkörpers mittels eines Schnellverschlusses befestigt sein, um einen schnellen Wechsel des Schneckenzylinders zu ermöglichen.

Die Spritzeinheit kann relativ zu dem Maschinenbett in Achsrichtung mittels einer Linearführung beweglich angeordnet sein.

Mit der vorgeschlagenen Lösung werden verschiedene Vorteile erzielt:
Vorteilhaft ist zunächst der sehr einfache, einstückige Aufbau. Wird der Grundkörper als Gussteil gefertigt, was bevorzugt ist, kann die mechanische Bearbeitung im Vergleich zu den vorbekannten Lösungen erheblich reduziert werden. Es kommen also sehr viel weniger Bauteile zum Einsatz, um den Grundkörper herzustellen. Dies spart Kosten.

Ferner ergibt sich im Vergleich mit der aus Platten und Holmen aufgebauten Lösung ein stabilerer Grundkörper. Demgemäß kann die Führung des Getriebeelements in präziserer Weise erfolgen.

Die Messung der in Achsrichtung wirkenden Kraft kann in sehr einfacher und genauer Weise erfolgen, da lediglich die lineare Dehnung eines Verbindungsabschnitts ermittelt werden muss, was sehr genau mittels eines Dehnmessstreifens möglich ist. Demgemäß ist es möglich, die Einspritzkraft genau und einfach zu bestimmen und der Maschinensteuerung zur Verfügung zu stellen. Die Messung kann insbesondere so durchgeführt werden, dass spezielle Einflüsse (z. B. die Rotation der Spindel in ihrer Mutter) und Planabweichungen der Spindel zur Mutter nicht mitgemessen werden. Vielmehr kann eine rein lineare Kraftmessung erfolgen, die von speziellen Effekten unverfälscht ist. Demgemäß ist das mit der vorgeschlagenen Vorrichtung gemessene Messsignal sehr gleichmäßig und die Auflösung der Messung ist gut.

Durch das erfindungsgemäße Vorsehen eines einstückigen Grundkörpers minimieren sich die Fertigungsungenauigkeiten. Der Grundkörper ist so konzipiert, dass sich bei Belastungen die Flächenauflage der Spindelmutter parallel verschiebt, also kein Achsversatz bei Belastung auftritt. Demgemäß kann die korrekte Position der Mutter leichter sichergestellt werden, als dies bei vorbekannten Lösungen der Fall ist.

In der Zeichnung sind Ausführungsbeispiele der Erfindung dargestellt. Es zeigen:
- Fig. 1: schematisch die Seitenansicht der Spritzeinheit einer Spritz- gießmaschine,
- Fig. 2: den Grundkörper der Spritzeinheit in perspektivischer Ansicht gemäß einem ersten Ausführungsbeispiel und
- Fig. 3: den Grundkörper der Spritzeinheit in perspektivischer Ansicht gemäß einem zweiten Ausführungsbeispiel.

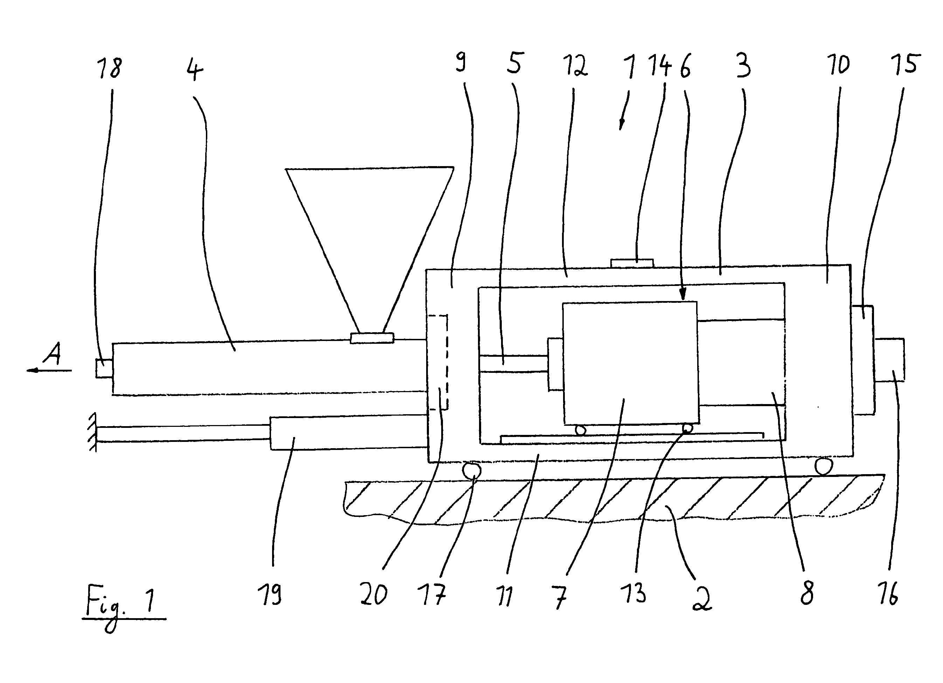

In Fig. 1 ist ein Teil einer Spritzgießmaschine, nämlich die Spritzeinheit 1 der Maschine dargestellt. Diese wird (in Fig. 1 links) an ein nicht dargestelltes Spritzgießwerkzeug angesetzt, wobei über eine Düse 18 Kunststoffschmelze in die Werkzeugkavität eingespritzt wird. Die Spritzeinheit 1 ist in Achsrichtung A beweglich auf einem Maschinenbett 2 angeordnet, um an das Werkzeug herangefahren bzw. von diesem weggefahren werden zu können. Hierfür ist die Spritzeinheit 1 mittels einer Linearführung 17 (die nur sehr schematisch angedeutet ist) auf dem Maschinenbett 3 angeordnet. Mittels eines Bewegungselements 19 kann die Spritzeinheit 1 in die gewünschte Stellung auf dem Maschinenbett 2 gefahren werden.

Die Spritzeinheit 1 hat folgenden Aufbau: Sie hat einen Grundkörper 3, der alle wesentlichen Komponenten der Spritzeinheit trägt bzw. aufnimmt. Der Grundkörper 3 ist gehäuseartig ausgeführt. Er hat zwei in Achsrichtung A endseitig angeordnete plattenförmige Aufnahmen 9 und 10. Diese sind im Ausführungsbeispiel quaderförmig ausgeführt. Die Aufnahmen 9 und 10 sind über Verbindungsabschnitte 11, 12, 12' miteinander verbunden.

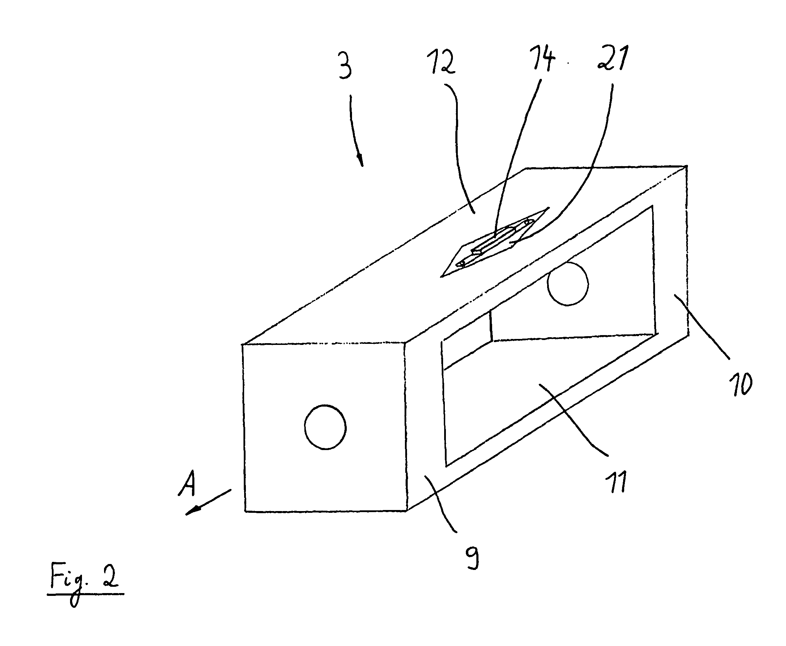

In Fig. 2 ist zu sehen, dass die Verbindungsabschnitte 11 und 12 jeweils plattenförmig ausgebildet sein können, wobei sich eine Platte 11 im unteren und eine Platte 12 im oberen Bereich zwischen den beiden Aufnahmen 9 und 10 erstreckt.

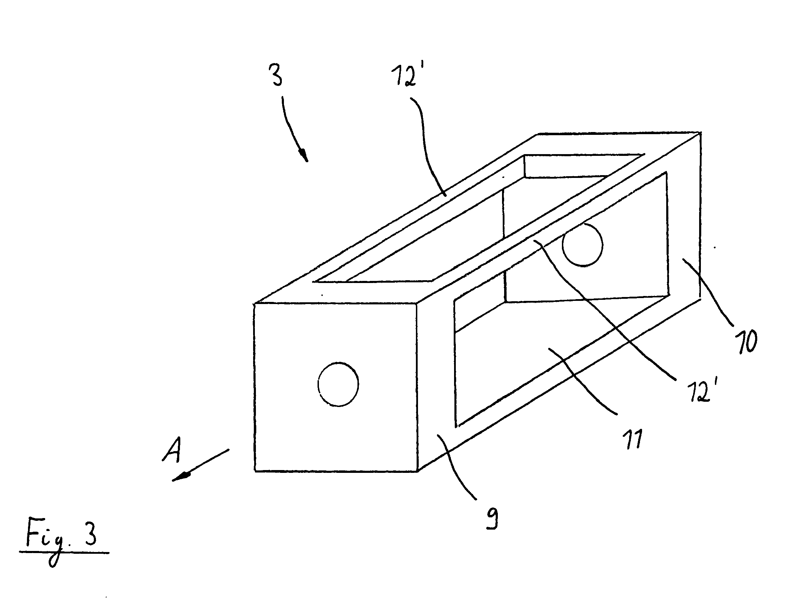

Gemäß Fig. 3 kann auch vorgesehen sein, dass die Verbindungsabschnitte 12' stabförmig ausgeführt sind. In der Figur ist dies nur für den oberen Bereich des Grundkörpers 3 vorgesehen; im unteren Bereich ist auch hier ein plattenartig ausgebildeter Verbindungsabschnitt 11 vorgesehen. Es kann aber auch genauso vorgesehen werden, dass sich - zwecks Gewichtsersparnis - vier stabförmige Verbindungsabschnitte 12' in den vier Eckbereichen der Aufnahmen 9 und 10 zwischen diesen erstrecken.

Die in Fig. 1 linke Aufnahme 9 ist ausgebildet, um einen Schneckenzylinder 4 aufzunehmen. Dies ist vorliegend so ausgeführt, dass der Schneckenzylinder 4 über einen Schnellverschluss 20 mit der Aufnahme 9 gekoppelt werden kann. Dies ermöglicht einen schnellen Wechsel des Schneckenzylinders 4. Im Schneckenzylinder 4 ist in bekannter Weise eine Plastifizier- und Einspritzschnecke 5 angeordnet.

Die Schnecke 5 muss in bekannter Weise rotieren, um Kunststoffmaterial zu plastifizieren. Zum Einspritzen der Schmelze in das Spritzgießwerkzeug muss die Schnecke 5 in Achsrichtung A relativ zum Schneckenzylinder 4 verschoben werden.

Dies bewerkstelligt ein Antriebselement 6, das aus einem Getriebeelement 7 und aus einem Bewegungselement 8 besteht. Das Getriebeelement 7 ist mittels einer Linearführung 13 in Achsrichtung A verschieblich im Grundkörper 3 angeordnet. Die Verschiebung veranlasst das Bewegungselement 8, das vorliegend als Spindel-Mutter-System ausgeführt ist. Ein nicht näher dargestellt elektrischer Servomotor, der im Bereich der Bezugsziffer 8 angeordnet ist, dreht eine Spindel 16, die eine Mutter 15 durchsetzt. Die Mutter 15 ist drehfest in der Aufnahme 10 befestigt. Beim Drehantrieb der Spindel 16 wird demgemäß das Getriebeelement 7 in Achsrichtung A relativ zum Grundkörper 3 verschoben.

Das Getriebeelement 7 sorgt indes für die Drehung der Schnecke 5, wofür ein entsprechender elektrischer Servomotor vorgesehen ist. Details des Getriebeelements 7 sind in Fig. 1 nicht erkennbar. Eine mögliche Ausgestaltung des Getriebeelements ist in der EP 0 998 380B1 detailliert erläutert, auf die insoweit Bezug genommen wird.

Für die Regelung des Spritzgießprozesses ist es wichtig, dass die axial in Achsrichtung A wirkende Kraft bekannt ist, mit der die Schnecke 5 die Schmelze ins Spritzgießwerkzeug presst. Ist diese Axialkraft bekannt, ergibt sich über die ebenfalls bekannte Querschnittsfläche der Schnecke 5 der Einspritzdruck.

Zur einfachen aber auch genauen Messung der Kraft ist auf mindestens einem der Verbindungsabschnitt 11, 12, 12' ein Messelement 14 in Form eines Dehnmessstreifens angeordnet. Wie es in den Figuren 1 und 2 illustriert ist, ist der Dehnmessstreifen 14 etwa mittig entlang der Erstreckung des Verbindungsabschnitts 12 in Achsrichtung A angeordnet. Der Dehnmessstreifen ist im Ausführungsbeispiel an der außenliegenden Oberfläche des Verbindungsabschnitts 12 angeordnet. Dabei ist vorgesehen, dass in dem Bereich, in dem das Messelement 14 angeordnet ist, die Dicke des Verbindungsabschnitts 12 reduziert ist. Dies ist durch das Bezugszeichen 21 markiert (rautenförmiger Bereich). Damit wird erreicht, dass innerhalb des Verbindungsabschnitts 12 ein Bereich ausgebildet wird, der bei Belastung eine höhere Dehnung aufweist, so dass die Messung mittels eines Dehnmessstreifens durch eine verbesserte Auflösung in erhöhter Genauigkeit erfolgen kann. Möglich ist statt der Reduzierung der Wanddicke auch die Ausbildung eines Durchbruchs, der dann bandartig von dem Messelement (Dehnmessstreifen) überbrückt wird.

Über die hiermit messbare Dehnung kann die Axialkraft bestimmt werden. Vorteilhaft ist, dass die wirkende Axialkraft die Mutter 15 auf ihrer Aufnahme 10 parallel verschiebt und kein Achsversatz bei Belastung vorliegt. Es kommt also bei Belastung zu einer reinen Axialverschiebung, und die effektiv und unverfälscht wirkende Axialkraft kann vom Dehnmessstreifen 14 genau erfasst werden.

Die Spritzgießmaschine ist vorliegend als sog. elektrische Maschine ausgeführt, d. h. alle benötigten Bewegungen werden mittels Elektromotoren (Servomotoren) veranlasst.

### Bezugszeichenliste:

- 1: Spritzeinheit
- 2: Maschinenbett
- 3: Grundkörper
- 4: Schneckenzylinder
- 5: Schnecke
- 6: Antriebselement
- 7: Getriebeelement
- 8: Bewegungselement
- 9: plattenförmige Aufnahme
- 10: plattenförmige Aufnahme
- 11: Verbindungsabschnitt
- 12: Verbindungsabschnitt
- 12': Verbindungsabschnitt
- 13: Linearführung
- 14: Messelement (Dehnmessstreifen)
- 15: Mutter
- 16: Spindel
- 17: Linearführung
- 18: Düse
- 19: Bewegungselement
- 20: Schnellverschluss
- 21: Bereich reduzierter Wanddicke

- A: Achsrichtung

## Patentansprüche

1. Spritzeinheit (1) einer Spritzgießmaschine, die relativ zu einem Maschinenbett (2) der Spritzgießmaschine in eine Achsrichtung (A) verschiebbar angeordnet ist, wobei die Spritzeinheit (1) einen Grundkörper (3) aufweist, an dem ein Schneckenzylinder (4) angeordnet ist, wobei in dem Schneckenzylinder (4) eine Schnecke (5) drehbar und axial verschieblich angeordnet ist, wobei die Schnecke (5) an einem axialen Ende mit einem Antriebselement (6) verbunden ist, das die Schnecke sowohl drehen als auch in Achsrichtung (A) verschieben kann, wobei das Antriebselement (6) ein in Achsrichtung (A) verschiebliches Getriebeelement (7) umfasst sowie ein Bewegungselement (8), das am Getriebeelement (7) und am Grundkörper (3) angreift und eine translatorische Verschiebebewegung in Achsrichtung (A) ausführen kann, wobei der Grundkörper (3) als einteiliger Block ausgebildet ist, der an seinem einen axialen Ende eine plattenförmige Aufnahme (9) für den Schneckenzylinder (4) und an seinem entgegengesetzten axialen Ende eine plattenförmige Aufnahme (10) für das Bewegungselement (8) aufweist, wobei die beiden plattenförmigen Aufnahmen (9, 10) über mindestens zwei Verbindungsabschnitte (11, 12, 12') miteinander verbunden sind,
**dadurch gekennzeichnet,**
**dass** an mindestens einem der Verbindungsabschnitte (11, 12, 12') ein Messelement (14) zur Messung des Spannungszustandes in Achsrichtung (A) angeordnet ist, wobei im Bereich des Messelements (14) die Wanddicke des Verbindungsabschnitts (11, 12, 12') zumindest teilweise reduziert ist und wobei das Messelement (14) einen Dehnungsmessstreifen umfasst.

2. Spritzeinheit nach Anspruch 1, **dadurch gekennzeichnet, dass** der Grundkörper (3) als Gussteil, insbesondere als Kugelgraphitgussteil, ausgeführt ist.

3. Spritzeinheit nach Anspruch 1 oder 2, **dadurch gekennzeichnet, dass** mindestens einer der Verbindungsabschnitte (11, 12) als Platte ausgebildet ist, die sich über die Breite des Grundkörpers (3) horizontal und quer zur Achsrichtung (A) erstreckt.

4. Spritzeinheit nach Anspruch 1 oder 2, **dadurch gekennzeichnet, dass** mindestens einer der Verbindungsabschnitte (12') als Stab ausgebildet ist, der sich in einem Eckenbereich des Grundkörpers (3) in Achsrichtung (A) erstreckt.

5. Spritzeinheit nach Anspruch 4, **dadurch gekennzeichnet, dass** vier als Stäbe ausgebildete Verbindungsabschnitte (12') in den vier Eckenbereich des Grundkörpers (3) angeordnet sind.

6. Spritzeinheit nach einem der Ansprüche 1 bis 5, **dadurch gekennzeichnet, dass** das Getriebeelement (7) zwei Elektromotoren, insbesondere zwei Servomotoren, umfasst, die für die Drehung der Schnecke (5) und die axiale Verschiebung des Getriebeelements (7) in Achsrichtung (A) ausgebildet sind.

7. Spritzeinheit nach einem der Ansprüche 1 bis 6, **dadurch gekennzeichnet, dass** das Getriebeelement (7) relativ zu dem Grundkörper (3) in Achsrichtung (A) mittels einer Linearführung (13) beweglich angeordnet ist.

8. Spritzeinheit nach einem der Ansprüche 1 bis 7, **dadurch gekennzeichnet, dass** das Bewegungselement (8) als Spindel-Mutter-System ausgeführt ist.

9. Spritzeinheit nach Anspruch 8, **dadurch gekennzeichnet, dass** die Mutter (15) des Spindel-Mutter-System (8) an der einen plattenförmigen Aufnahme (10) befestigt ist.

10. Spritzeinheit nach Anspruch 8 und 9, **dadurch gekennzeichnet, dass** die Spindel (16) des Spindel-Mutter-System (8) durch das Getriebeelement (7) gedreht werden kann.

11. Spritzeinheit nach einem der Ansprüche 1 bis 10, **dadurch gekennzeichnet, dass** der Schneckenzylinder (4) an der einen plattenförmigen Aufnahme (9) des Grundkörpers (3) mittels eines Schnellverschlusses befestigt ist.

12. Spritzeinheit nach einem der Ansprüche 1 bis 11, **dadurch gekennzeichnet, dass** die Spritzeinheit (1) relativ zu dem Maschinenbett (2) in Achsrichtung (A) mittels einer Linearführung (17) beweglich angeordnet ist.

## Claims

1. Injection unit (1) of an injection molding machine which is arranged movable relatively to a machine base (2) of the injection molding machine in an axial direction (A), wherein the injection unit (1) comprises a base body (3) at which a screw cylinder (4) is arranged, wherein a screw (5) is arranged rotatable and axially movable in the screw cylinder (4), wherein the screw (5) is connected with a drive element (6) at one of its axial ends which can rotate the screw and can also move it in axial direction (A), wherein the drive element (6) comprises a gear element (7) which is movable in axial direction (A) as well as an actuator (8) which is in engagement with the gear element (7) and with the base body (3) and which can perform a translational movement in axial direction (A) and wherein the base body (3) is designed as a one-piece block which has a plate-shaped reception (9) for the screw cylinder (4) at one of its axial ends and has a plate-shaped reception (10) for the actuator (8) at its opposite axial end, wherein the two plate-shaped receptions (9, 10) are connected via at least two connection sections (11, 12, 12'),
**characterized in**
**that** a measuring element (14) for measuring the stress state in axial direction (A) is arranged at at least one of the connection sections (11, 12, 12'), wherein in the region of the measuring element (14) the wall thickness of the connection section (11, 12, 12') is reduced at least partially and wherein the measuring element (14) comprises a strain gauge.

2. Injection unit according to claim 1, **characterized in that** the base body (3) is a cast part, especially a part made from spheroidal graphite cast iron.

3. Injection unit according to claim 1 or 2, **characterized in that** at least one of the connection sections (11, 12) is designed as a plate which extends along the width of the base body (3) horizontally and transversal to the axial direction (A).

4. Injection unit according to claim 1 or 2, **characterized in that** at least one of the connection sections (12') is designed as a rod which extends along the axial direction (A) in a corner region of the base body (3).

5. Injection unit according to claim 4, **characterized in that** four connection sections (12') being designed as rods are arranged in the four corner regions of the base body (3).

6. Injection unit according to one of claims 1 till 5, **characterized in that** the gear element (7) comprises two electric motors, especially two servo motors, which are arranged for the rotation of the screw (5) and for the axial movement of the gear element (7) in axial direction (A).

7. Injection unit according to one of claims 1 till 6, **characterized in that** the gear element (7) is movable relatively to the base body (3) by means of a linear guiding (13) in axial direction (A).

8. Injection unit according to one of claims 1 till 7, **characterized in that** the actuator (8) is designed as a spindle-nut-system.

9. Injection unit according to claim 8, **characterized in that** the nut (15) of the spindle-nut-system (8) is affixed at one of the plate-shaped receptions (10).

10. Injection unit according to claim 8 or 9, **characterized in that** the spindle (16) of the spindle-nut-system (8) can be rotated by the gear element (7).

11. Injection unit according to one of claims 1 till 10, **characterized in that** the screw cylinder (4) is affixed at one of the plate-shaped receptions (9) of the base body (3) by means of a quick fastener.

12. Injection unit according to one of claims 1 till 11, **characterized in that** the injection unit (1) is movable in axial direction (A) relatively to the machine base (2) by means of a linear guiding (17).

## Revendications

1. Unité d'injection (1) d'une machine de moulage par injection, qui est disposée par rapport à un banc de machine (2) de la machine de moulage par injection de manière déplaçable dans une direction axiale (A), l'unité d'injection (1) présentant un corps de base (3) sur lequel est disposé un cylindre de vis sans fin (4), une vis sans fin (5) étant disposée de manière à pouvoir tourner et être déplacée axialement dans le cylindre de vis sans fin (4), la vis sans fin (5) étant connectée au niveau d'une extrémité axiale à un élément d'entraînement (6) qui peut à la fois faire tourner la vis sans fin et la déplacer dans la direction axiale (A), l'élément d'entraînement (6) comprenant un élément d'engrenage (7) déplaçable dans la direction axiale (A) ainsi qu'un élément de déplacement (8), lequel vient en prise avec l'élément d'engrenage (7) et avec le corps de base (3) et peut effectuer un mouvement de déplacement en translation dans la direction axiale (A), le corps de base (3) étant réalisé sous forme de bloc d'une seule pièce, qui présente, au niveau de l'une de ses extrémités axiales, un logement en forme de plaque (9) pour le cylindre de vis sans fin (4), et, au niveau de son extrémité axiale opposée, un logement en forme de plaque (10) pour l'élément de déplacement (8), les deux logements en forme de plaque (9, 10) étant connectés l'un à l'autre par le biais d'au moins deux portions de connexion (11, 12, 12'),
**caractérisée en ce**
**qu'**un élément de mesure (14) pour mesurer l'état de tension dans la direction axiale (A) est disposé au niveau d'au moins l'une des portions de connexion (11, 12, 12'), l'épaisseur de paroi de la portion de connexion (11, 12, 12') étant réduite au moins en partie dans la région de l'élément de mesure (14) et l'élément de mesure (14) comprenant un ruban de mesure d'extension.

2. Unité d'injection selon la revendication 1, **caractérisée en ce que** le corps de base (3) est réalisé sous forme de pièce coulée, en particulier sous forme de pièce coulée en graphite sphérique.

3. Unité d'injection selon la revendication 1 ou 2, **caractérisée en ce qu'**au moins l'une des portions de connexion (11, 12) est réalisée sous forme de plaque qui s'étend sur la largeur du corps de base (3) horizontalement et transversalement par rapport à la direction axiale (A).

4. Unité d'injection selon la revendication 1 ou 2, **caractérisée en ce qu'**au moins l'une des portions de connexion (12') est réalisée sous forme de barre qui s'étend dans une région de coin du corps de base (3) dans la direction axiale (A).

5. Unité d'injection selon la revendication 4, **caractérisée en ce que** quatre portions de connexion (12') réalisées sous forme de barres sont disposées dans les quatre régions de coin du corps de base (3).

6. Unité d'injection selon l'une quelconque des revendications 1 à 5, **caractérisée en ce que** l'élément d'engrenage (7) présente deux moteurs électriques, en particulier deux servomoteurs, qui sont réalisés pour assurer la rotation de la vis sans fin (5) et le déplacement axial de l'élément d'engrenage (7) dans la direction axiale (A).

7. Unité d'injection selon l'une quelconque des revendications 1 à 6, **caractérisée en ce que** l'élément d'engrenage (7) est disposé de manière déplaçable par rapport au corps de base (3) dans la direction axiale (A) au moyen d'un guide linéaire (13).

8. Unité d'injection selon l'une quelconque des revendications 1 à 7, **caractérisée en ce que** l'élément de déplacement (8) est réalisé sous forme de système à broche et écrou.

9. Unité d'injection selon la revendication 8, **caractérisée en ce que** l'écrou (15) du système à broche et écrou (8) est fixé sur l'un des logements en forme de plaque (10).

10. Unité d'injection selon les revendications 8 et 9, **caractérisée en ce que** la broche (16) du système à broche et écrou (8) peut être tournée par l'élément d'engrenage (7).

11. Unité d'injection selon l'une quelconque des revendications 1 à 10, **caractérisée en ce que** le cylindre de vis sans fin (4) est fixé au niveau de l'un des logements (9) en forme de plaque du corps de base (3) au moyen d'une fermeture à raccord rapide.

12. Unité d'injection selon l'une quelconque des revendications 1 à 11, **caractérisée en ce que** l'unité d'injection (1) est disposée de manière déplaçable par rapport au banc de machine (2) dans la direction axiale (A) au moyen d'un guide linéaire (17).
